# EUROPÄISCHE PATENTSCHRIFT

(11) **EP 2 735 082 B1**
(45) Veröffentlichungstag und Bekanntmachung des Hinweises auf die Patenterteilung: **16.02.2022**
(21) Anmeldenummer: 12733010.8
(22) Anmeldetag: 21.06.2012
(51) Int. Cl.: B61L 19/06, B61L 27/00, H02J 3/32, H02J 13/00

(54) **EINRICHTUNG ZUM BETREIBEN VON IN EINER EISENBAHNINFRASTRUKTUR ANGEORDNETEN DEZENTRALEN FUNKTIONSEINHEITEN**
DEVICE FOR OPERATING DECENTRALIZED FUNCTIONAL UNITS ARRANGED IN A RAILWAY INFRASTRUCTURE
DISPOSITIF PERMETTANT DE FAIRE FONCTIONNER DES UNITÉS FONCTIONNELLES DÉCENTRALISÉES DISPOSÉES DANS UNE INFRASTRUCTURE FERROVIAIRE

(30) Priorität: 22.07.2011 EP 11174992; 17.11.2011 EP 11189530
(43) Veröffentlichungstag der Anmeldung: 28.05.2014
(73) Patentinhaber: Siemens Mobility AG, 8304 Wallisellen (CH)
(72) Erfinder: REICHLIN, Anton, CH-8400 Winterthur (CH); HELFER, Daniel, CH-8303 Bassersdorf (CH)
(74) Vertreter: Deffner, Rolf
(86) Internationale Anmeldenummer: PCT/EP2012/062007
(87) Internationale Veröffentlichungsnummer: WO 2013/013908

(56) Entgegenhaltungen:
- EP-A1- 1 995 916
- EP-A2- 1 122 856
- DE-A1- 19 733 765
- DE-A1-102008 044 902
- DE-A1-102009 057 704
- US-A1- 2011 109 266

## Beschreibung

Die vorliegende Erfindung bezieht sich auf eine Einrichtung und ein Verfahren zum Betreiben von in einer Eisenbahninfrastruktur angeordneten dezentralen verkehrsüberwachenden und/ oder verkehrssteuernden Funktionseinheiten.

Derartige dezentrale Funktionseinheiten werden im Besonderen in Schienenverkehrsnetzwerken z.B wie die Eisenbahn eingesetzt, wo diese genutzt werden, um Fahrzeug beeinflussende und/oder Fahrzeug überwachende Einheiten zu steuern und bezüglich der Funktionalität zu überwachen und um Prozessdaten aufzunehmen und zurück zu melden. Als zugbeeinflussende Einheiten, die also Anweisungen an den Fahrzeugführer geben oder sogar direkt Eingriffe in der Fahrzeugsteuerung vornehmen oder direkt einen sicheren Fahrweg einstellen, können beispielsweise Signale, Weichen, Balisen, Linienleiter, Gleismagnete und dergleichen sowie auch Sensoren zum Erfassen von Prozessgrössen des fahrenden Zuges, wie Leistungsaufnahme, Geschwindigkeit und dergleichen, betrachtet werden. Als Zug- und Gleisabschnitt überwachende Einheiten können ebenfalls Balisen und Linienleiter, aber auch Achszähler und Gleisstromkreise genannt werden. Grundsätzlich betrifft die vorliegende Offenbarung aber alle industriellen Anlagen, in denen funktionale Einheiten über grössere Strecken verteilt sind und dennoch zentral gesteuert werden müssen. Die zentrale Steuerung kann dabei von einer ortsfesten Leitstelle, aber auch durch eine nicht-ortsfeste virtuelle Leitstelle wahrgenommen werden.

Im Eisenbahnverkehr ist es üblicherweise so, dass diese dezentralen Funktionseinheiten von einem Stellwerk oder einem abgesetzten Stellrechner gesteuert werden. Für den Datentransfer zwischen dem Stellwerk und den Funktionseinheiten im Gleisbereich sind heute in der Regel standardisierte Kupferkabel vorgesehen, für deren klassische Stelldistanzlängen wegen der physikalischen

Übertragungsparameter, den Kabelbelägen (RLC), bei 10 km in der Praxis die obere Grenze liegt. Bei gewissen Typen von Funktionseinheiten kann diese obere Limite jedoch auch nur bei maximal 6,5 km liegen.

Heutzutage stehen jedoch auch schon Datennetzwerke bei Eisenbahnen im Einsatz, welche dazu verwendet werden z.B. Daten unter benachbarten Stellwerken oder der Stellwerken und Leittechnik auszutauschen. Sie werden jedoch nicht in der Weise eingesetzt, um zugbeeinflussende und/oder zugüberwachende Funktionseinheiten zu steuern und zu überwachen, um dadurch eine Überbrückung von fast beliebigen Stelldistanzen zu ermöglichen. Diese Netzwerke sind vielmehr vom Typ eines Datentransportnetzwerkes (DTN), z.B. ein optisches Transportnetzwerkes, ausgestaltet und werden für die Übermittlung von Daten für die operationelle Betriebsebene und dergleichen eingesetzt.

Derartige Datennetzwerke erlauben eine sehr viel höhere Anzahl von Freiheitsgraden hinsichtlich
- der Festlegung der Position der Kopplungspunkte für den Anschluss von Stellwerk- und Leittechnikanlagen oder Teilen davon und somit dessen Aufstellungsorte,
- der angewandten Übertragungs-Verfahren und der Distanzen der Kommunikation unter verschiedenen Anlagenteilen.

Diese Datennetzwerke ermöglichen so mitunter eine wesentliche Verbesserung beim Preis/Leistungsverhältnis und dennoch ein hoch zuverlässiger und entsprechend sicherer Datenaustausch der Eisenbahnsicherungseinrichtungen entlang von Gleisanlagen.

Anschauliche Anwendungsbeispiele für derartige Datennetzwerke sind Nebenstrecken oder Strecken mit ETCS Level 2 oder lange Tunnelstrecken, für die heute immer noch wegen der Limite bei den Stelldistanzlängen mit herkömmlichen Stellwerkkabeln eine Anordnung von Stellwerkrechnern innerhalb von Tunnels erforderlich macht. Die dort herrschenden rauen Einsatzbedingungen erfordern, dass die Stellwerkrechner in Kavernen oder Containern gekapselt und klimatisiert betrieben werden. Der Unterhalt ist in diesen Fällen entsprechend aufwendig. Die ganze Problematik besteht also darin, dass bedingt durch die limitierten Stelldistanzen Stellwerk und Aussenanlageteile nicht beliebig weit auseinander liegen können.

Die neuartigen Datennetzwerke haben jedoch einen Nachteil dahingehend, dass im Grunde jede zentrale und dezentrale Funktionseinheit in geeigneter Weise über einen Zugangspunkt und aus Gründen der Verfügbarkeit in redundanter Weise an ein solches Datennetzwerk angekoppelt werden muss. Damit ist momentan an einem einzelnen Netzwerkknoten für einen Anschluss einer Funktionseinheit ein vergleichsweise hoher Aufwand für die Kopplung mit dem Datennetzwerk erforderlich bei gleichzeitig nur vergleichsweise geringer Datentransferrate in Relation zur Netzwerkkapazität. Während heutige Glasfasernetze beispielsweise Übertragungsraten von GigaBit bis hin zu TeraBit Transferleistung zulassen, werden diesen Übertragungsraten bei diesen sicherungstechnischen Anwendungen jedoch nur sehr marginal genutzt.

Zugleich ist darüber hinaus durchaus ein wirtschaftliches Interesse seitens der Bahninfrastruktur-Betreiber erkennbar, die bestehenden sogenannten langlebigen Stellwerkkabel (an die Schienenwege angepasste Kupferkabel), welche heute für den Betrieb der Funktionseinheiten durch die Stellwerke eingesetzt werden, weiterhin für die Ansteuerung der Aussenanlagen zu nutzen.

Zur Lösung dieser Aufgabe sind aus der europäischen Patentanmeldung EP 2 301 202 A1 eine Einrichtung und ein Verfahren zur Steuerung und/oder Überwachung von entlang eines Verkehrsnetzwerks angeordneten dezentralen Funktionseinheiten bekannt, welche folgenden Kernpunkte umfassen:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die jeweils an einem Netzzugangspunkt angeschlossen sind, wobei:
d) die dezentralen Funktionseinheiten zu Untergruppen mit jeweils eigenem Subnetzwerk zusammengefasst sind; und wobei
e) das Subnetzwerk jeder der Untergruppen an jedem seiner beiden Ende jeweils über eine Kommunikationseinheit und über einem Netzzugangspunkt an dem Datentransportnetzwerk angekoppelt ist.

Auf diese Weise kann für die Ankopplung der dezentralen Funktionseinheiten ein digitales Transportnetzwerk genutzt werden, welches in jeder Weise robust gegen ein einfaches Fehlerereignis ist, dennoch eine sehr geschickte Verwendung von sehr breit in der Bahntechnik eingesetzten Cu-Kabeln, zum Beispiel bisher vorhandenen Stellwerkskabeln, erlaubt und schliesslich auch nur eine vergleichsweise geringe Zahl von Netzzugangspunkten benötigt.

Eine derartige Einrichtung ist dabei in besonders vorteilhafter Weise für ein Schienennetz für den Eisenbahnverkehr einsetzbar. Folglich ist dann in einer weiteren vorteilhaften Ausgestaltung zweckmässig, mittels den dezentralen Funktionseinheiten verkehrsüberwachende und verkehrssteuernde Funktionseinheiten, wie insbesondere Signale, Weichen, Achszähler, Gleisstromkreise, punkt- und linienförmige Zugbeeinflussungselemente, an das Datentransportnetzwerk anzukoppeln.

Der Aufbau von technischen Anlagen, besonders auch in der Bahninfrastruktur, ist aufgrund der über 100 jährigen Geschichte des Industrieanlagenbaus und des Eisenbahnwesens auf Robustheit und Zuverlässigkeit ausgelegt. In der damaligen Konzeption wurden besonders die Aussenelemente der Bahnsicherungsanlagen über relativ kräftige Kabeladern angeschlossen, um die Schaltzustände über die definierten Distanzen sicher detektieren zu können, d.h. die Auslegung erfolgt entsprechend der Spitzenbelastungen mit ausreichender Reserve. Mit dem Schaltvorgang der Aussenelemente wird über die Energiezuführung auch die Information übermittelt. Daraus folgt aber in naheliegender Weise auch, dass die möglichen Distanzen durch den detektierbaren Energiefluss begrenzt sind. Unter heutigen Flexibilitäts-, Kosten- und Ressourcenpolitischen -Aspekten sind diese etablierten Konzepte neben der durch die EP 2 301 202 A1 offenbarte Kommunikationsstruktur dringend auch im Bereich der Energiezuführung zu innovieren. Im Zuge der hiermit eingeleiteten Modernisierung wird die Siemens Aktiengesellschaft, Division Mobility, in den kommenden Jahren grundlegende Innovationen in Bezug auf seine Stellwerksarchitekturen durchführen, wobei der Lösung zur Dezentralisierung der Steuer- und Meldesysteme in den Anlagen voll Rechnung getragen wird. Dies bedeutet, dass im Endausbau alle zu steuernden und überwachenden Elemente (Signale, Weichen, Zugsicherungssysteme, Gleisfreimeldesysteme wie z.B. Achszählpunkte, Bahnübergänge) vor Ort am Gleis ein Steuer- bzw. eine Meldegerät - im folgenden Element

Controller EC oder dezentrale Funktionseinheit DFE genannt - erhalten.

DE 197 33 765 A1 offenbart ein System zur Versorgung und Steuerung von entfernten Feldelementen in einem Schienennetz.

DE 10 2009 057704 A1 zeigt eine Stromversorgungseinrichtung für einen Weichenantrieb, wobei die Stromversorgungseinrichtung einen Energiespeicher verwendet, der durch eine Kommunikationsleitung gespeist wird.

Da die strategische Basis für die Zukunft aus den zwei nachfolgend aufgeführten Architekturänderungen bei den elektronischen Stellwerken von Siemens dazu führen wird, dass die bisherige Kopplung von Information und Energie aufgelöst wird, ist es neben dem Einführen eines echtzeitfähigen und hochverfügbaren Wide-Area-Kommunikationssystems zwischen dem Stellwerkrechner (zentrale Steuerungseinheit) und den Stell- und Überwachungsgeräten (Element Controllern EC) entlang dem Gleis erforderlich die Zuführung der Energie vom Stellwerk zu den Element Controllern am Gleis komplett neu zu konzipieren, was Aufgabe der vorliegenden Erfindung ist.

Bezüglich der Einrichtung wird diese Aufabe erfindungsgemäss durch eine Einrichtung gemäß dem unabhängigen Anspruch 1 gelöst.

Bezüglich des Verfahrens wird diese Aufgabe erfindungsgemäss durch ein Verfahren gemäß dem unabhängigen Anspruch 5 gelöst.

Auf diese Weise ist nun auch das Energietransportnetz vollkommen von einem Stellwerk entkoppelt und kann dank der vorgesehenen Energiespeicher nun hinsichtlich der Verkabelung und der Übertragungskapazität auf eine gewisse vorbestimmbare Grundlast ausgelegt werden, wobei Lastspitzen der elektrischen Leistungsaufnahme, beispielsweise beim Ändern der Lage einer Weiche, Schliessen und Öffnen eines Bahnübergangs, durch die intelligenten Energiespeicher geglättet wird. Die Energiespeicher werden als intelligent bezeichnet, weil sie sich für die Leistungsaufnahme und/oder die Leistungsabgabe mit dem übergeordneten Steuerungssystem und/oder mindestens einem der übrigen Energiespeicher dahingehend abstimmen, dass das Aufladen und/oder das Entladen in einer gesteuerten, kontrollierten Weise erfolgen kann.

Ausgehend von der heutigen Stellwerkarchitektur mit dezentralen Stationen, aber Punkt-zu-Punkt-Energiezuführung, wird mit der vorliegenden Erfindung ein neuer, innovativer Ansatz beschritten. Die heutigen kabel- und arbeitsintensiven Punkt- zu Punkt-Verbindungen für die Stromversorgung bzw. die Energieversorgung der peripheren Elemente entlang dem Gleis (Element Controller oder auch dezentrale Funktionseinheit genannt) werden ersetzt durch adersparende und einfach zu montierende Bus- oder Ringleitungen. Der Einsatz von intelligenten, dezentralen Energiespeichern ermöglicht eine einfache Energieversorgung der Element Controller entlang des Gleises auch über grosse Distanzen mit Zuleitungen von kleinem Aderquerschnitt. Kurzeitige Spitzenlasten, wie der Umlauf einer Weiche oder das Öffnen der Schranke eines Bahnübergangs, werden durch die auch als Kurzzeitenergiespeicher ausführbaren Energiespeicher vor Ort abgedeckt. Die Anlagen müssen damit nicht mehr auf den "Worst Case"-Energieverbrauch dimensioniert werden, sondern es genügt eine Auslegung auf den mittleren Energieverbrauch. Unterstützend wirkt ein übergeordnetes intelligentes Energiemanagement über die gesamte Anlage für die bedarfsgerechte Zuteilung der Energie bei den einzelnen Verbrauchern. Das intelligente Energiemanagement berücksichtigt einerseits die für eine bestimmte Anlage geforderte Verfügbarkeit in Abhängigkeit der Streckenkategorie sowie auch das aktuelle Verkehrsaufkommen im Bahnbetrieb. Als Energiespeicher können die neuesten Speichertechnologien, z.B. SuperCaps (z.B. Kurzzeitenergiespeicher dezentral) oder Schwungradspeicher mit Verbundwerkstoffen als Systemkomponente zum Einsatz kommen. Damit gelingt es mit vorliegenden Erfingung auch, die heutigen batteriegestützten USV-Systeme (Blei-Accumulatoren) wo immer möglich durch günstigere und ökologisch bessere Speicherkomponenten zu ersetzen. Eine weitere Innovation stellt dabei auch die Eigenintelligenz des einzelnen Energiespeichers im Gesamtsystem dar. Je nach Anordnung des Speichers in der Netz-Topologie soll nicht nur Energie bedarfsgerecht für einen direkt zugeordneten Verbraucher zur Verfügung gestellt werden, sondern es soll ebenfalls möglich sein, Energie in das Gesamtsystem zurück zu speisen. Dadurch wird die Redundanz der Energiebereitstellung erhöht und es kann so die Verfügbarkeit der Stellwerksanlage gesichert, bzw. gegenüber der heutigen Architektur sogar erhöht werden.

Daneben ergeben sich aus der Verwendung intelligenter Energiespeicher sehr weitgehende Möglichkeiten der flexiblen Gestaltung der Stellwerksinfrastruktur bzw. allgemein von Energienetzen. Smart Grids könnten z.B. auf der Basis der hier beschriebenen intelligenten Speicher relativ einfach möglich werden, ohne dass wesentliche Teile eines bestehenden Energieverteilungsnetzes komplett umgestellt werden müssen. Mit diesem Ansatz wird nicht nur die bisherige Punkt-zu-Punkt-Leitungsführung für die Energieversorgung entlang dem Gleis auf eine neue Basis gestellt, sondern ebenfalls die dadurch bedingte räumlich begrenzte Ausdehnung von Stellwerksanlagen (0 bis 6,5 km) aufgelöst. Dies ermöglicht in Zukunft die Implementierung von elektronischen Stellwerksarchitekturen, die sowohl den Anforderungen nach Funktionalität, Zuverlässigkeit und maximaler Verfügbarkeit Rechnung tragen, als auch Aspekten der Schonung von Ressourcen, Nachhaltigkeit, Energieeffizienz und ökologischer und ökonomischer Gestaltung der Bahninfrastrukturen genügen. Die vorliegende Offenbarung beschränkt sich aber längst nicht nur auf den beschriebenen Anwendungsfall der Stellwerksarchitektur von Bahnanlagen, sondern geht weit darüber hinaus. Als zukünftige Beispiele werden das Energiemanagement für Gebäude oder für Grossanlagen in der produzierenden oder verarbeitenden Industrie auf der Basis dezentraler Energiespeicher gesehen.

In der vorliegenden Erfindung sind mittels den dezentralen Funktionseinheiten verkehrsüberwachende und verkehrssteuernde Funktionseinheiten, wie insbesondere Signale, Weichen, Achszähler, Gleisstromkreise, punkt- und linienförmige Zugbeeinflussungselemente, an das Datentransportnetzwerk angekoppelt. Die dezentrale Funktionseinheit stellt somit auch die für den Betrieb einer Signals, einer Weiche, eines Achszählers, eines Gleisstromkreises oder eines punkt- und/oder linienförmigen Zugbeeinflussungselements, erforderlich Energie bereit.

Um den verteilten Ansatz für die Energiespeicherung im Energienetzwerk gewährleisten zu können, ist es zweckmässig, wenn die intelligenten Energiespeicher Steuerungs- und Kommunikationsmittel umfassen, die es den intelligenten Energiespeichern erlauben, Auflade- und/oder Entladevorgänge mittels einer entsprechenden Datenkommunikation untereinander zu koordinieren. Dabei kann die Datenkommunikation über das Energietransportnetz ausgeführt werden (Stichwort: Powerline Communication); alternativ oder ergänzend dazu können die intelligenten Energiespeicher wie eine dezentrale Funktionseinheit mittels jeweils vorhandener Kommunikationseinheit an dem Datentransportnetzwerk ankoppeln und die Datenkommunikation der intelligenten Energiespeicher über das Datentransportnetzwerk erfolgt. Somit kann den Energiespeichern eine Intelligenz dahingehend ermöglicht werden, dass die Leistungsaufnahme und -abgabe in einer kontrollierten Weise innerhalb des Energietransportnetz vorgenommen wird.

In der vorliegenden Erfindung wird eine Leistungsaufnahme durch einen Energiespeicher so gesteuert, dass diese Leistungsaufnahme nur dann ausgeführt wird, wenn keine über die Grundlast im Energietransportnetz hinausgehende Leistungsaufnahme durch eine dezentrale Funktionseinheit auftritt. Damit wird die Aufnahme beispielsweise so gesteuert, dass während dem energieintensiven Umlaufen einer Weiche oder dem Schliessen und Öffnen eines Bahnübergangs eigentlich keine Leistung zum Aufladen eines Energiespeichers aus dem Energietransportnetz entnommen werden kann.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden anhand der Zeichnung näher erläutert. Dabei zeigen:
- Figur 1: in schematischer Ansicht den Aufbau einer Einrichtung E zur Steuerung und/oder Überwachung von entlang eines Eisenbahnnetzwerkes angeordneten dezentralen Funktionseinheiten gemäss EP 2 302 202 A1;
- Figur 2: in schematischer Ansicht eine vereinfachte Darstellung der Einrichtung gemäss Figur 1;
- Figur 3: in schematischer Ansicht die Darstellung der Einrichtung gemäss Figur 2 mit dem überlagerten Energieversorgungskonzept gemäss der vorliegenden Erfindung;
- Figur 4: in schematischer Ansicht die Anschaltung von Feldelementen an ein Stellwerk gemäss dem Stand der Technik;
- Figur 5: in schematischer Ansicht die Anschaltung von Feldelementen an ein Stellwerk und einen Energiebus gemäss der vorliegenden Erfindung;
- Figur 6: in schematischer Ansicht einen intelligenten Energiespeicher; und
- Figur 7: in schematischer Ansicht das Ergebnis einer Simulationsrechnung für eine hinsichtlich der Feldelemente und der Energiespeicher skalierbare Situation im Gleisbereich.

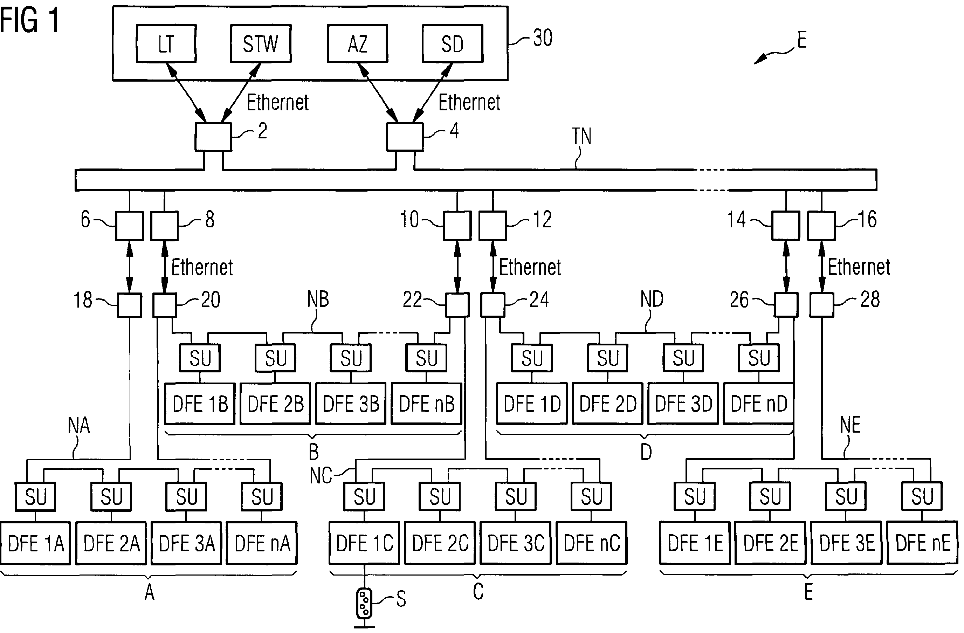

Figur 1 zeigt in schematischer Ansicht den Aufbau einer Einrichtung E zur Steuerung und/oder Überwachung von entlang eines Eisenbahnnetzwerkes (hier nicht weiter dargestellt) angeordneten dezentralen Funktionseinheiten DFE1A bis DFEnA, DFE1B bis DFEnB usw. (im Nachfolgenden auch Element Controller EC genannt). Sollte nicht eine bestimmte Funktionseinheit gemeint sein, werden die dezentralen Funktionseinheiten nachfolgend mit DFE bezeichnet. Derartige dezentrale Funktionseinheiten DFE werden genutzt, um zugbeeinflussenden und/oder zugüberwachende Einheiten zu steuern und zu überwachen. Als zugbeeinflussende Einheiten können beispielsweise Signale, Weichen, Balisen, Linienleiter, Gleismagnete und dergleichen genannt werden.

Als zugüberwachende Einheiten können ebenfalls Balisen und Linienleiter, aber auch Achszähler und Gleisstromkreise genannt werden. Beispielhaft wird durch die dezentrale Funktionseinheit DFE1C ein Signal S gesteuert und überwacht. Die dezentrale Funktionseinheit DFE 1C steuert dabei die Anzeige der Signalbegriffe und führt respektive assistiert bei Überwachungsfunktionen, wie beispielsweise der Überwachung des Lampenstroms im Signal.

Jede dezentrale Funktionseinheit DFE respektive die von gesteuerte/überwachte Einheit verfügt im gesamten Netzwerk über eine eindeutige Adresse, beispielsweise eine IP-Adresse oder eine MAC-Adresse.

Die Einrichtung E umfasst weiter ein Datentransportnetzwerk TN mit einer Anzahl von Netzzugangspunkten 2 bis 16. An einem Teil dieser Netzzugangspunkte 6 bis 16 sind Kommunikationseinheiten 18 bis 28 angeschlossen. Das Datentransportnetzwerk TN ist hierbei als hochverfügbares Netzwerk ausgestaltet. Solche hochverfügbaren Strukturen können sich einerseits durch eine redundante Ausführung des Netzes selbst und/oder andererseits durch eine geschickte Re-Organisation des Netzes beim Ausfall eines Verbindungsstückes ergeben.

Ausserdem umfasst die Einrichtung E ein übergeordnetes Steuerungssystem 30, das neben anderen hier nicht weiter aufgeführten Komponenten eine Leitstelle LT, einen Stellwerkrechner STW, einen Achszählerrechner AZ und eine Service/Diagnose-Einheit SD umfasst, die über die Netzzugangspunkte 2 und 4 mittels Ethernet-Verbindungen an das Datentransportnetzwerk TN angeschlossen sind.

Wie in der Figur 1 gezeigt, müssen die dezentralen Funktionseinheiten DFE über eine der Kommunikationsgruppen 18 bis 28 und den entsprechende Netzwerkknoten 6 bis 16 an dem Transportnetzwerk TN angekoppelt sein und können so über dieses Datentelegramme erhalten oder austauschen. Die dezentralen Funktionseinheiten DFE sind dabei zu Untergruppen A, B, C, D und E mit jeweils eigenem Subnetzwerk NA, NB, NC, ND und NE zusammengefasst. Die Untergruppe A wird beispielsweise aus den dezentralen Funktionseinheiten DFE1A, DFE2A, DFE3A bis DFEnA gebildet. Dabei sind die Untergruppen A bis E immer an ihren beiden Enden mit je einer der Kommunikationsgruppen 18 bis 28 und einem Netzzugangspunkten 6 bis 16 verbunden. Jeder dezentralen Funktionseinheit DFE ist zudem ein Vermittlungsrechner SU, der alternativ auch direkt in die dezentrale Funktionseinheit DFE integriert sein kann, vorgeschaltet, welcher für die dezentralen Funktionseinheiten DFE den Anschluss an das Subnetzwerk bereitstellt, damit jede dezentrale Funktionseinheit DFE beim Ausfall einer Kommunikationsgruppe noch von einer zweiten redundanten Kommunikationsgruppe 18 bis 28 angesprochen werden kann.

Jedes Subnetzwerk (NA bis NE) ist somit aus einer Anzahl von Punkt-zu-Punkt-Verbindungen von logisch benachbarten dezentralen Funktionseinheiten (DFE) aufgebaut. Dabei ist eine Punkt-zu-Punkt-Verbindung als autonome Übertragungsstrecke innerhalb des Subnetzwerks ausgebildet, zum Beispiel als ISDN-Übertragungsstrecke oder als xDSL-Übertragungsstrecke oder LWL-Übertragungsstrecke. Somit kann ein einzelnes Subnetzwerk sozusagen aus einzelnen Übertragungszellen aufgebaut werden, die ihrerseits jeweils immer nur die Übertragung von Punkt zu Punkt beherrschen müssen. Mit anderen Worten gesprochen können so beispielsweise aus einfachen, eher kurzreichweitigen Übertragungstechniken auch ein viel längeres und komplexeres Subnetzwerk zusammengesetzt werden. Aus diesem Grund ist es zweckmässig, die Punkt-zu-Punkt-Verbindung an jedem Ende mit einem Vermittlungsmodul (SU) zu terminieren, wodurch sich sogar die Chance ergibt, die Punkt-zu-Punkt-Übertragungstechnik von Zelle zu Zelle zu ändern und so die jeweils geeigneteste Übertragungstechnik auswählen zu können. Ein geeignetes Vermittlungsmodul (SU) kann hierzu so ausgestaltet sein, dass es eine Anzahl von Punkt-zu-Punkt-Übertragungstechniken bereitstellt und in Abhängigkeit von der Beschaltung selbstorganisierend die durch die Beschaltung bestimmte Punkt-zu-Punkt-Übertragungstechnik bereitstellt.

Weiter sind die Untergruppen A bis E jeweils auf eine erste Anschlussart oder eine zweite Anschlussart an die zwei Kommunikationsgruppen 18 bis 28 angeschlossen. In der ersten Anschlussart, wie beispielsweise für die Untergruppen A, C und E gezeigt, wird das zugehörige Subnetzwerk NA, NC und NE in zwei geographisch dicht beieinanderliegenden Kommunikationsgruppen 18 und 20 bzw. 22 und 24 bzw. 26 und 28 terminiert, was in der Figur 1 durch die unmittelbare Nachbarschaft der Kommunikationsgruppenpaare 18, 20 und 22, 24 und 26, 28 gezeigt sein soll. In der zweiten Anschlussart, wie für die Untergruppen B und D gezeigt, wird das jeweilige Subnetzwerk NB bzw. ND mit den räumlich weiter auseinanderliegenden Kommunikationsgruppen 20, 22 bzw. 24, 26 terminiert. Auch hier ist dann jede Untergruppe B und D beim Ausfall einer der beiden zugehörigen Kommunikationsgruppen immer noch an einer weiteren Kommunikationsgruppe angeschlossen.

Nimmt man nun einmal an, dass die Netzzugangspunkte 6, 8 und 10, 12 und 14, 16 jeweils an Stationen des Eisenbahnnetzwerkes angeordnet sind, dann stellen die Untergruppen A, C und E eher die im Stationsbereich angeordneten dezentralen Funktionseinheiten DFE dar. Die Untergruppen B und D repräsentieren eher solche dezentrale Funktionseinheiten DFE, die im Bereich zwischen zwei Stationen auf freier Strecke angeordnet sind. Dabei können für die Ankopplung dieser dezentralen Funktionseinheiten DFE möglicherweise die zu weiten Teilen bestehenden Cu-Kabel adernsparend genutzt werden, was am Beispiel der Untergruppe B erläutert wird. Vormals sind beispielsweise die dezentralen Funktionseinheiten DFE1B, DFE2B und DFE3B aus der Station am Netzzugangspunkt 8 angesteuert worden. Entsprechend wurden die übrigen dezentralen Netzzugangspunkte DFEnB aus der Station am Netzzugangspunkt 10 angesteuert. Somit genügte die Herstellung einer Verbindung nur zwischen den dezentralen Funktionseinheiten DFE3B und DFEnB, um die Untergruppe B im Subnetzwerk NB zusammen zu schalten.

Die Systemgrenzen der Einrichtung E können dabei wie folgt beschrieben werden:
- die Anzahl der Netzzugangspunkte 2 bis 16 an dem Transportportnetzwerk OTN ist nur durch die Systemperformance (Stellwerkrechner STW, Transportnetzwerk OTN) begrenzt;
- die Anzahl der DFE's an einem Subnetzwerk A bis E beträgt im Minimum eine DFE: Die maximale Anzahl der anschliessbaren DFE's ist durch die Systemperformance begrenzt (erwünscht sein können z.B. mind. 8 DFE's);
- die Anzahl der Kommunikationseinheiten 18 bis 28 an einem Netzzugangspunkt 6 bis 16 ist im wesentlichen durch die max.

Anzahl der Ethernet-Schnittstellen der gewählten Netzzugangspunkte 6 bis 16 begrenzt.
- die max. Anzahl der anschliessbaren Subnetzwerke A bis E an einer Kommunikationseinheit 18 bis 28 kann im gewählten Ausführungsbeispiel vier Subnetzwerke betragen.

Zur Verfügbarkeit kann festgestellt werden, dass: ein Subnetzwerk A bis E an zwei Kommunikationseinheiten 18 bis 28 angeschlossen sein muss;
- die zu einem Subnetzwerk A bis E gehörenden Kommunikationseinheiten 18 bis 28 an zwei Netzzugangspunkten angeschlossen sein müssen; dabei können die zwei Netzzugangspunkte 2 bis 16 am gleichen Transportnetzwerk OTN oder an zwei Netzzugangspunkten von zwei unterschiedlichen Transportnetzwerken angeschlossen sein (dieser Fall mit einem zweiten Transportnetzwerk OTN ist hier nicht dargestellt worden, aber technisch ohne weiteres realisierbar).

Um den Performance-Anforderungen zu genügen und mit einfachen Übertragungsmitteln, wie z.B. ISDN, arbeiten zu können, können die Telegramme innerhalb der Subnetzwerke A bis E unterschieden werden in Realtime und Nichtrealtime-Telegramme:
- Realtime Telegramme: Nutzdatentelegramme vom Stellwerk zu den DFE's, keine TCP/IP-Telegramme, spezieller Ethernet-Frametyp;
- Nicht-Realtime Telegramme: normale TCP/IP-Telegramme, keine Nutzdatentelegramme.

Die Telegrammtypen haben feste Timeslots zugeordnet. Die Zuordnung kann während dem Betrieb fix und offline parametrierbar sein, beispielsweise im Verhältnis von mindestens 1 zu 10.

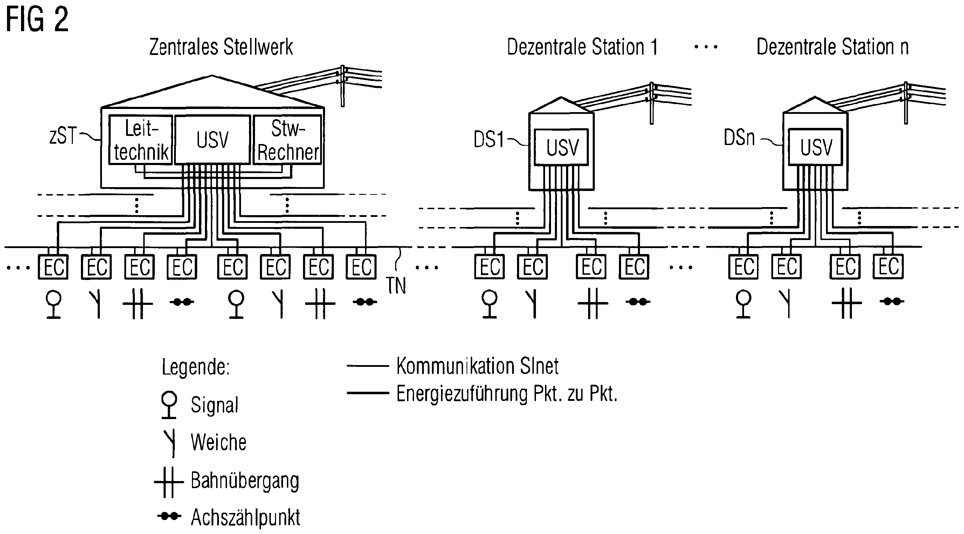

Figur 2 zeigt nun die Situation gemäss Figur 1 in einer vereinfachten Darstellung. Die Element-Controller EC sind datentechnisch an dem Datentransportnetzwerk TN angeschlossen und werden aus einem zentralen Stellwerk zST bzw. aus dezentralen Stationen DS1 bis DSn über jeweils eine universelle Spannungsversorgung USV direkt mit elektrischer Energie versorgt. Dieser Ausführungsform hängt also nach wie vor der Makel an, dass bestimmte Stelldistanzen mit dieser Versorgungslösung nicht (mehr) realisiert werden können. Beispielhaft hierzu ist die Distanz von etwa 6,5 km, bis zur Signallampen noch zuverlässig über den fliessenden Lampenstrom überwacht werden können.

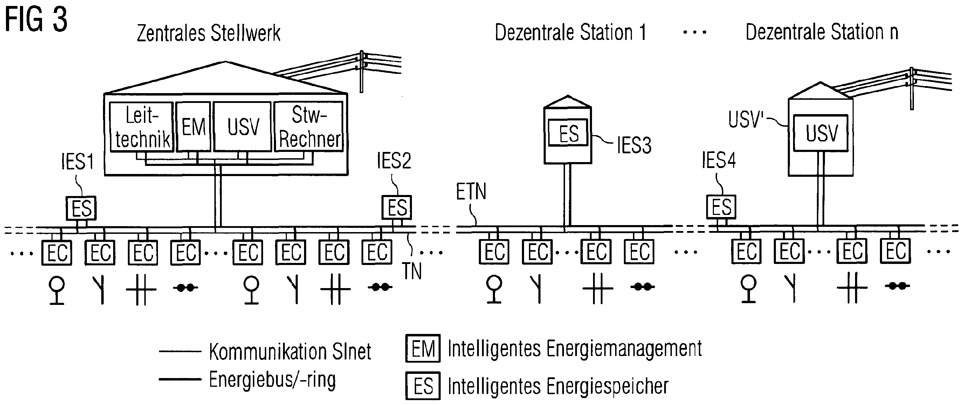

Figur 3 zeigt nun in schematischer Darstellung die gemäss Figur 1 nur noch datentechnisch gültige Situation mit dem erfindungsgemässen Energieversorgungskonzept. Alle Element-Controller sind nun an demselben Energietransportnetz ETN.

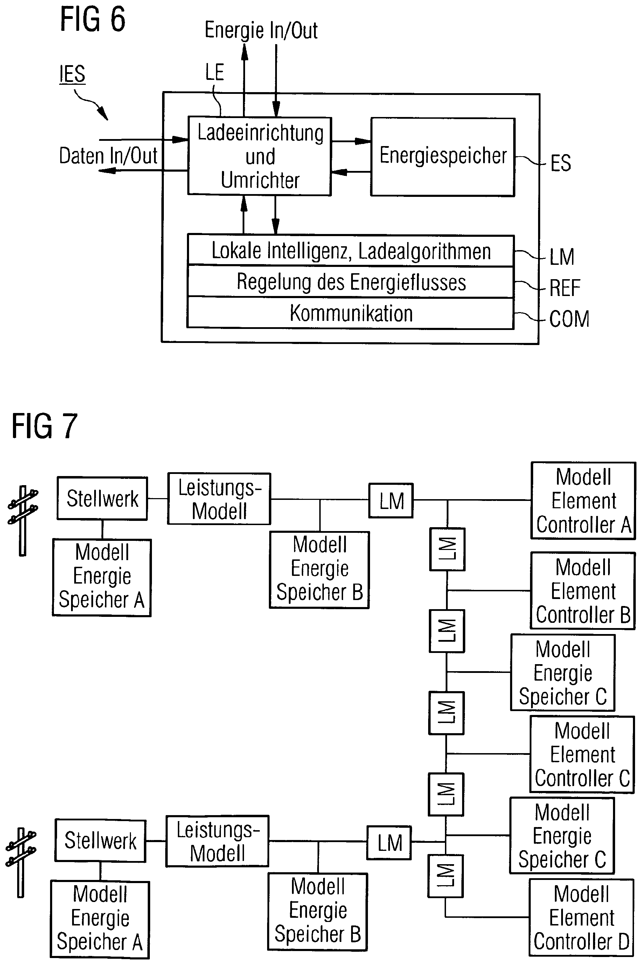

Die Einspeisung von elektrischer Energie erfolgt nun nicht mehr ausschliesslich aus dem zentralen Stellwerk, sondern erfolgt auch über extern Spannungsversorgungen USV', die aber sonst wie keinerlei Bezug mehr zu der datentechnischen Behandlung der Element-Controller EC haben. An geeigneten Positionen des Elektrotransportnetzes ETN sind nun intelligente Energiespeicher IES1 bis IES4 an dem Elektrotransportnetz ETN und dem Datentransportnetz TN angeschlossen, so dass diese intelligenten Energiespeicher IES1 bis IES4 datentechnisch über das Datentransportnetz TN mit dem zentralen Stellwerk zST kommunizieren können und somit eine Leistungsaufnahme und/oder -abgabe von einem in der Logik des zentralen Stellwerks zST implementierten Energiemanager IEM kontrolliert erfolgen kann. Die intelligenten Energiespeicher IES1 bis IES4 verfügen dabei neben einer Ladeeinrichtung mit Umrichter LE und dem eigentlichen Energiespeicher ES über ein lokales Logikmodul LM, eine Regelung eines Energieflusses REF sowie ein Kommunikationsmodul COM (vgl. Figur 6).

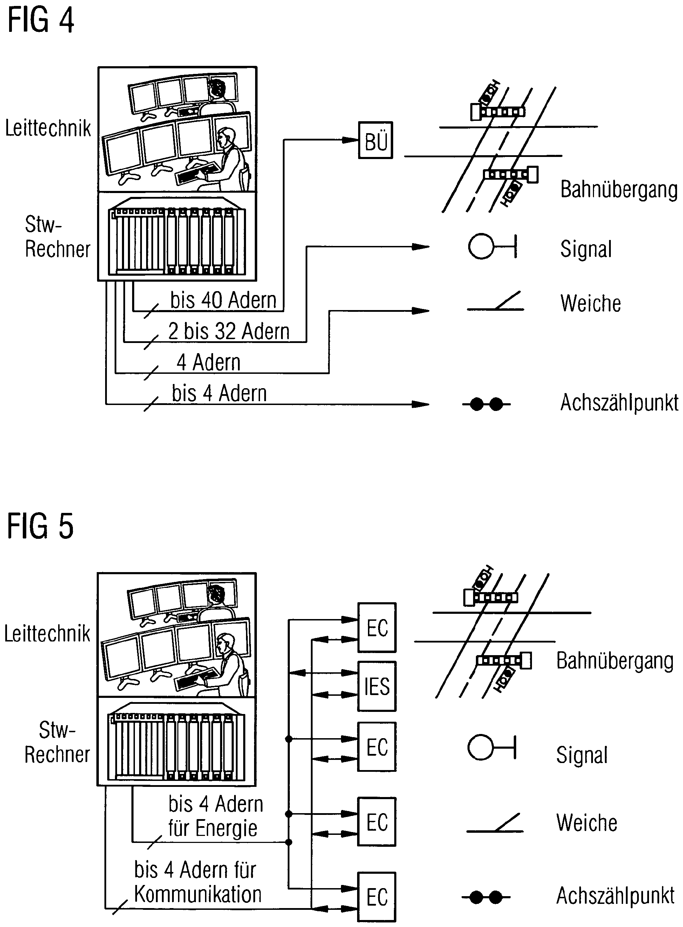

Figur 4 zeigt schematisch die Anschaltung von Feldelementen, wie Bahnübergang, Signal, Weiche und Achszählpunkt, nach dem Stand der Technik. Für einen Bahnübergang verlassen den Stellwerkrechner STW bis zu 40 Kabeladern für die Speisung und die Datenkommunikation. Entsprechend verfügt ein Signal je nach Aufbau und Aufgabe über 2 bis 32 Kabeladern, eine Weiche über vier Kabeladern und ein Achszählpunkt über bis zu 4 Kabeladern. Gemäss dem in Figur 5 gezeigten neuen Konzept gehen vom Stellwerkrechner STW für die gleichen Feldelemente dann nur von vier Kabeladern für die elektrische Energie und bis zu vier Kabeladern für die Kommunikation heraus. Dabei ist der Stellwerkrechner wie schon in Figur 1 dargestellt über einen Netzzugangspunkt 2 an dem Datentransportnetz TN angeschlossen.

Die Figur 7 zeigt nun beispielhaft das Ergebnis einer Simulationsrechnung für eine hinsichtlich der Feldelemente und der Energiespeicher skalierbare Situation im Gleisbereich. Dabei werden auch skalierbare Leitungsmodelle und skalierbare Energiespiecher eingesetzt. Als Energiespeicher können dabei auch mechanische Schwungradspeicher und Super-Kondensatoren eingesetzt werden. Die Figur 7 zeigt daher auch den Nutzen des vorliegenden Konzepts der dezentral verteilt angeordneten Energiespeicher im Energietransportnetz auf, sodass die Auslegung des Energietransportnetzes den Beitrag der Energiespeicher dahingehend nutzen kann, dass die Leitungsadern des Netzwerks nur für eine vorbestimmbare Basisleistung ausgelegt werden müssen.

## Patentansprüche

1. Einrichtung (E) zum Betreiben von in einer Eisenbahninfrastruktur angeordneten dezentralen verkehrsüberwachenden und/oder verkehrssteuerende Funktionseinheiten (DFE), umfassend:
a) ein übergeordnetes Steuerungssystem (30), das dazu eingerichtet ist, mit den dezentralen Funktionseinheiten (DFE) mittels Datentelegrammen (DT) Informationen auszutauschen,
b) ein Datentransportnetzwerk (TN) mit einer Anzahl von Netzzugangspunkten (2 bis 16), wobei das übergeordnete Steuerungssystem (30) über mindestens einen Netzzugangspunkt (2, 4) an dem Datentransportnetzwerk (TN) angekoppelt ist;
c) Kommunikationseinheiten (18 bis 28), die an einem Netzzugangspunkt (6 bis 16) angeschlossen sind und dazu eingerichtet sind, den dezentralen Funktionseinheiten den Zugang zu dem Datentransportnetzwerk (TN) bereitzustellen,
d) ein Energietransportbus (ETN), an den die dezentralen Funktionseinheiten (DFE) angeschlossen sind und der dazu eingerichtet ist, die dezentralen Funktionseinheiten (DFE) mit elektrischer Energie zu versorgen, wobei die Kapazität des Energietransportbusses (ETN) auf eine mittlere Leistungsaufnahme der an den Energietransportbus (ETN) angeschlossenen dezentralen Funktionseinheiten (DFE) abgestimmt ist; **gekennzeichnet durch** e) eine Mehrzahl von intelligenten an dem Energietransportbus (ETN) angeschlossenen Energiespeichern (IES), wobei die intelligenten Energiespeicher (IES) dazu eingerichtet sind, eine Energieaufnahme auszuführen, wenn maximal die mittlere Leistungsaufnahme im Energietransportbus (ETN) durch eine oder mehrere dezentrale Funktionseinheiten (DFE) auftritt, und wobei die intelligenten Energiespeicher (IES) dazu eingerichtet sind, eine Energieabgabe zur Glättung von einer über die mittlere Leistungsaufnahme hinausgehenden elektrischen Leistungsaufnahme durch eine oder mehrere der dezentralen Funktionseinheiten (DFE) auszuführen, wobei die intelligenten Energiespeicher Steuerungs- und Kommunikationsmittel umfassen, mit denen die intelligenten Energiespeicher dazu eingerichtet sind, die Energieaufnahme und die Energieabgabe mittels einer entsprechenden Datenkommunikation untereinander zu koordinieren.

2. Einrichtung nach Anspruch 1,
**dadurch gekennzeichnet, dass** mittels den dezentralen Funktionseinheiten (DFE) verkehrsüberwachende und verkehrssteuernde Einheiten, wie insbesondere Signale, Weichen, Achszähler, Gleisstromkreise, punkt- und linienförmige Zugbeeinflussungselemente, an das Datentransportnetzwerk (OTN) ankoppelbar sind.

3. Einrichtung nach Anspruch 1 oder 2, **dadurch gekennzeichnet, dass** die intelligenten Energiespeicher dazu eingerichtet sind, die Datenkommunikation über den Energietransportbus auszuführen.

4. Einrichtung nach Anspruch 2 oder 3,
**dadurch gekennzeichnet, dass** die intelligenten Energiespeicher wie eine dezentrale Funktionseinheit mittels jeweils vorhandener Kommunikationseinheit an dem Datentransportnetzwerk (TN) angekoppelt sind und die Datenkommunikation der intelligenten Energiespeicher über das Datentransportnetzwerk erfolgt.

5. Verfahren zum Betreiben von in einer Eisenbahninfrastruktur angeordneten dezentralen verkehrsüberwachenden und/oder verkehrssteuerende Funktionseinheiten (DFE), umfassend:
a) ein übergeordnetes Steuerungssystem (30), das mit den dezentralen Funktionseinheiten (DFE) mittels Datentelegrammen (DT) Informationen austauscht,
b) ein Datentransportnetzwerk (TN) mit einer Anzahl von Netzzugangspunkten (2 bis 16), wobei das übergeordnete Steuerungssystem (30) über mindestens einen Netzzugangspunkt (2, 4) an dem Datentransportnetzwerk (TN) angekoppelt ist;
c) Kommunikationseinheiten (18 bis 28), die an einem Netzzugangspunkt (6 bis 16) angeschlossen sind und den dezentralen Funktionseinheiten den Zugang zu dem Datentransportnetzwerk (TN) bereitstellen,
d) ein Energietransportbus (ETN), an den die dezentralen Funktionseinheiten (DFE) angeschlossen sind und der die dezentralen Funktionseinheiten (DFE) mit elektrischer Energie versorgt, wobei die Kapazität des Energietransportbusses (ETN) auf eine mittlere Leistungsaufnahme der an den Energietransportbus (ETN) angeschlossenen dezentralen Funktionseinheiten (DFE) abgestimmt wird; **dadurch gekennzeichnet, dass**
e) eine Mehrzahl von intelligenten an dem Energietransportbus (ETN) angeschlossenen Energiespeichern (IES) vorgesehen ist, wobei eine Energieaufnahme durch die Energiespeicher ausgeführt wird, wenn maximal die mittlere Leistungsaufnahme im Energietransportbus durch eine oder mehrere dezentrale Funktionseinheiten auftritt, und wobei eine Energieabgabe durch die Energiespeicher zur Glättung von einer über die mittlere Leistungsaufnahme hinausgehende elektrische Leistungsaufnahme durch eine oder mehrere der dezentralen Funktionseinheiten ausgeführt wird, wobei die intelligenten Energiespeicher Steuerungs- und Kommunikationsmittel umfassen, mit denen die intelligenten Energiespeicher die Energieaufnahme und die Energieabgabe mittels einer entsprechenden Datenkommunikation untereinander koordinieren.

6. Verfahren nach Anspruch 5,
**dadurch gekennzeichnet, dass** mittels den dezentralen Funktionseinheiten (DFE) verkehrsüberwachende und verkehrssteuernde Funktionseinheiten, wie insbesondere Signale, Weichen, Achszähler, Gleisstromkreise, punkt- und linienförmige Zugbeeinflussungselemente, an das Datentransportnetzwerk (OTN) angekoppelt sind.

7. Verfahren nach Anspruch 6,
**dadurch gekennzeichnet, dass**
die Datenkommunikation über den Energietransportbus ausgeführt wird.

8. Verfahren nach Anspruch 6 oder 7,
**dadurch gekennzeichnet, dass**
die intelligenten Energiespeicher (IES) wie eine dezentrale Funktionseinheit (DFE) mittels jeweils vorhandener Kommunikationseinheit an dem Datentransportnetzwerk (TN) ankoppeln und die Datenkommunikation der intelligenten Energiespeicher (IES) über das Datentransportnetzwerk (TN) erfolgt.

## Claims

1. Device (E) for operating decentralised functional units (DFE) monitoring and/or controlling traffic arranged in a rail infrastructure, comprising:
a) a superordinate control system (30) which is designed to interchange information with the decentralised functional units (DFE) by means of data telegrams (DT),
b) a data transport network (TN) with a number of network access points (2 to 16), wherein the superordinate control system (30) is coupled via at least one network access point (2, 4) to the data transport network (TN);
c) communication units (18 to 28), which are connected to a network access point (6 to 16) and are designed to provide the decentralised functional units with access to the data transport network (TN),
d) an energy transport bus (ETN) to which the decentralised functional units (DFE) are connected and which is designed to supply the decentralised functional units (DFE) with electrical energy, wherein the capacitance of the energy transport bus (ETN) is attuned to an average power input of the decentralised functional units (DFE) connected to the energy transport bus (ETN),
**characterised by**
e) a number of intelligent energy stores (IES) connected to the energy transport bus (ETN), wherein the intelligent energy stores (IES) are designed to carry out an energy input if at most the average power input in the energy transport bus (ETN) occurs by means of one or more decentralised functional units (DFE), and wherein the intelligent energy stores (IES) are designed to carry out an energy output in order to smooth an electrical power input which exceeds the average power input by means of one or more of the decentralised functional units (DFE), wherein the intelligent energy stores comprise control and communication means, with which the intelligent energy stores are designed to coordinate the energy input and the energy output with one another by means of a corresponding data communication.

2. Device according to claim 1,
**characterised in that**
units monitoring and controlling traffic, such as in particular signals, switches, axle counters, track circuits, point and line-type train-influencing elements, are able to be coupled to the data transport network (OTN) by means of the decentralised functional units (DFE).

3. Device according to claim 1 or 2,
**characterised in that**
the intelligent energy stores are designed to carry out the data communication via the energy transport bus.

4. Device according to claim 2 or 3,
**characterised in that**
the intelligent energy stores are coupled to the data transport network (TN) like a decentralised functional unit by means of a communication unit available in each case and data communication of the intelligent energy stores takes place via the data transport network.

5. Method for operating decentralised functional units (DFE) monitoring and/or controlling traffic and arranged in a rail infrastructure, comprising:
a) a superordinate control system (30) which interchanges information with the decentralised functional units (DFE) by means of data telegrams (DT),
b) a data transport network (TN) with a number of network access points (2 to 16), wherein the superordinate control system (30) is coupled via at least one network access point (2, 4) to the data transport network (TN);
c) communication units (18 to 28), which are connected to a network access point (6 to 16) and provide the decentralised functional units with access to the data transport network (TN),
d) an energy transport bus (ETN) to which the decentralised functional units (DFE) are connected and which supplies the decentralised functional units (DFE) with electrical energy, wherein the capacitance of the energy transport bus (ETN) is attuned to an average power input of the decentralised functional units (DFE) connected to the energy transport bus (ETN),
**characterised in that**
e) a number of intelligent energy stores (IES) connected to the energy transport bus (ETN) is provided, wherein an energy input is carried out by the energy store, if at most the average power input in the energy transport bus occurs by means of one or more decentralised functional units, and wherein an energy output is carried out by the energy store in order to smooth an electrical power input which exceeds the average power input by means of one or more of the decentralised functional units, wherein the intelligent energy stores comprise control and communication means, with which the intelligent energy stores coordinate the energy input and the energy output with one another by means of a corresponding data communication.

6. Method according to claim 5,
**characterised in that**
functional units monitoring and controlling traffic, such as particular signals, switches, axle counters, track circuits, point and line-type train influencing elements are coupled to the data transport network (OTN) by means of the decentralised functional units (DFE).

7. Method according to claim 6,
**characterised in that**
the data communication is carried out via the energy transport bus.

8. Method according to claim 6 or 7,
**characterised in that**
the intelligent energy stores (IES) are coupled to the data transport network (TN) like a decentralised functional unit by means of a communication unit available in each case and data communication of the intelligent energy stores (IES) takes place via the data transport network (TN).

## Revendications

1. Dispositif (E) permettant de faire fonctionner des unités fonctionnelles décentralisées de surveillance du trafic et/ou de gestion du trafic (DFE) disposées dans une infrastructure ferroviaire, comprenant :
a) un système de commande prioritaire (30) qui est conçu pour échanger des informations avec les unités fonctionnelles décentralisées (DFE) au moyen de datagrammes (DT),
b) un réseau de transport de données (TN) avec une quantité de points d'accès au réseau (2 à 16), dans lequel le système de commande prioritaire (30) est couplé par l'intermédiaire d'au moins un point d'accès au réseau (2, 4) au réseau de transport de données (TN) ;
c) des unités de communication (18 à 28) qui sont connectées à un point d'accès au réseau (6 à 16) et sont conçues pour mettre l'accès au réseau de transport de données (TN) à disposition des unités fonctionnelles décentralisées,
d) un bus de transport d'énergie (ETN) auquel sont connectées les unités fonctionnelles décentralisées (DFE) et qui est conçu pour alimenter en énergie électrique les unités fonctionnelles décentralisées (DFE), dans lequel la capacité du bus de transport d'énergie (ETN) est harmonisée avec une consommation de puissance moyenne des unités fonctionnelles décentralisées (DFE) connectées au bus de transport d'énergie (ETN) ; **caractérisé par**
e) une pluralité d'accumulateurs d'énergie intelligents (IES) connectés au bus de transport d'énergie (ETN), dans lequel les accumulateurs d'énergie intelligents (IES) sont conçus pour réaliser une consommation d'énergie lorsque, au maximum, la consommation de puissance moyenne dans le bus de transport d'énergie (ETN) se produit à travers une ou plusieurs unités fonctionnelles décentralisées (DFE), et dans lequel les accumulateurs d'énergie intelligents (IES) sont conçus pour réaliser une distribution d'énergie permettant le lissage d'une consommation de puissance électrique dépassant la consommation de puissance moyenne par une ou plusieurs des unités fonctionnelles décentralisées (DFE), dans lequel les accumulateurs d'énergie intelligents comprennent des moyens de commande et de communication avec lesquels les accumulateurs d'énergie intelligents sont conçus pour coordonner mutuellement la consommation d'énergie et la distribution d'énergie au moyen d'une communication de données correspondante.

2. Dispositif selon la revendication 1, **caractérisé en ce que**, au moyen des unités fonctionnelles décentralisées (DFE), des unités de surveillance du trafic et de gestion du trafic, comme en particulier des signaux, des aiguillages, des compteurs d'essieux, des circuits de voie, des éléments de contrôle de train formant des points et des lignes, peuvent être couplées au réseau de transport de données (OTN).

3. Dispositif selon la revendication 1 ou 2, **caractérisé en ce que** les accumulateurs d'énergie intelligents sont conçus pour réaliser la communication de données par l'intermédiaire du bus de transport d'énergie.

4. Dispositif selon la revendication 2 ou 3, **caractérisé en ce que** les accumulateurs d'énergie intelligents comme une unité fonctionnelle décentralisée sont couplés au réseau de transport de données (TN) respectivement au moyen d'une unité de communication présente et la communication de données des accumulateurs d'énergie intelligents se produit par l'intermédiaire du réseau de transport de données.

5. Procédé permettant de faire fonctionner des unités fonctionnelles décentralisées de surveillance du trafic et/ou de gestion du trafic (DFE) disposées dans une infrastructure ferroviaire, comprenant :
a) un système de commande prioritaire (30) qui échange des informations avec les unités fonctionnelles décentralisées (DFE) au moyen de datagrammes (DT),
b) un réseau de transport de données (TN) avec une quantité de points d'accès au réseau (2 à 16), dans lequel le système de commande prioritaire (30) est couplé au réseau de transport de données (TN) par l'intermédiaire d'au moins un point d'accès au réseau (2, 4) ;
c) des unités de communication (18 à 28) qui sont connectées à un point d'accès au réseau (6 à 16) et mettent l'accès au réseau de transport de données (TN) à disposition des unités fonctionnelles décentralisées,
d) un bus de transport d'énergie (ETN) auquel sont connectées les unités fonctionnelles décentralisées (DFE) et qui alimente en énergie électrique les unités fonctionnelles décentralisées (DFE), dans lequel la capacité du bus de transport d'énergie (ETN) est harmonisée avec une consommation de puissance moyenne des unités fonctionnelles décentralisées (DFE) connectées au bus de transport d'énergie (ETN) ; **caractérisé en ce que**
e) une pluralité d'accumulateurs d'énergie intelligents (IES) connectés au bus de transport d'énergie (ETN) sont prévus, dans lequel une consommation d'énergie est réalisée par le biais des accumulateurs d'énergie, lorsque, au maximum, la consommation de puissance moyenne dans le bus de transport d'énergie se produit à travers une ou plusieurs unités fonctionnelles décentralisées, et dans lequel une distribution d'énergie est réalisée par le biais des accumulateurs d'énergie pour le lissage d'une consommation de puissance électrique dépassant la consommation de puissance moyenne par une ou plusieurs des unités fonctionnelles décentralisées, dans lequel les accumulateurs d'énergie intelligents comprennent des moyens de commande et de communication avec lesquels les accumulateurs d'énergie intelligents coordonnent mutuellement la consommation d'énergie et la distribution d'énergie au moyen d'une communication de données correspondante.

6. Procédé selon la revendication 5, **caractérisé en ce que**, au moyen des unités fonctionnelles décentralisées (DFE) des unités fonctionnelles de surveillance du trafic et de gestion du trafic, comme en particulier des signaux, des aiguillages, des compteurs d'essieux, des circuits de voie, des éléments de contrôle de train formant des points et des lignes, peuvent être couplées au réseau de transport de données (OTN).

7. Procédé selon la revendication 6, **caractérisé en ce que** la communication de données est réalisée par l'intermédiaire du bus de transport d'énergie.

8. Procédé selon la revendication 6 ou 7, **caractérisé en ce que** les accumulateurs d'énergie intelligents (IES) comme une unité fonctionnelle décentralisée (DFE) se couplent au réseau de transport de données (TN) respectivement au moyen d'une unité de communication présente et la communication de données des accumulateurs d'énergie intelligents (IES) se produit par l'intermédiaire du réseau de transport de données (TN).
